# FASCICULE DE BREVET EUROPEEN

(11) **EP 2 136 104 B1**
(45) Date de publication et mention de la délivrance du brevet: **15.02.2012**
(21) Numéro de dépôt: 09162910.5
(22) Date de dépôt: 17.06.2009
(51) Int. Cl.: G05G 23/02

(54) **Dispositif pour transmettre un mouvement de rotation et mécanisme de transmission comprenant un tel dispositif**
Vorrichtung zum Übertragen einer Drehbewegung und eine solche Vorrichtung umfassender Übertragungsmechanismus
Device for transmitting a rotation movement and transmission mechanism comprising such a device

(30) Priorité: 19.06.2008 FR 0854065
(43) Date de publication de la demande: 23.12.2009
(73) Titulaire: SKF Aerospace France, 26240 Saint-Vallier-sur-Rhone (FR)
(72) Inventeur: Roussey, Bastien Jean Charles, 26600 Tain l'Hermitage (FR)
(74) Mandataire: Myon, Gérard Jean-Pierre

(56) Documents cités:
- EP-A- 0 061 216
- WO-A-98/55780
- JP-A- 60 243 875

## Description

La présente invention concerne un dispositif pour transmettre un mouvement de rotation avec réduction de vitesse. Par ailleurs, la présente invention concerne un mécanisme de transmission de mouvement, pour piloter un aéronef, comprenant un tel dispositif.

Un aéronef, en particulier un avion, comporte généralement un mécanisme de transmission équipé d'au moins un levier, communément appelé « manche », que le pilote manoeuvre pour transmettre des commandes aux organes directionnels de l'aéronef. Le levier est relié aux organes directionnels par l'intermédiaire d'au moins un dispositif de transmission de mouvement de rotation. Le mécanisme de transmission peut, quant à lui, transmettre des mouvements de rotation ou de translation.

Un dispositif de transmission de l'art antérieur comprend généralement des engrenages pour transmettre un mouvement de rotation avec réduction de vitesse. En fonction du couple à transmettre, les engrenages peuvent présenter un rapport de démultiplication relativement élevé, typiquement de l'ordre de 7, en un seul étage. Pour assurer une bonne ergonomie du pilotage, le jeu angulaire que présente le levier lors des manoeuvres par le pilote doit être faible, voire nul, dans les deux sens d'entraînement, y compris pour des valeurs de couples élevées et pour des températures de fonctionnement comprises entre -15°C et +55°C. De plus, comme un mécanisme de transmission d'aéronef est destiné à fonctionner à des températures comprises entre -40°C et +60°C, il doit tolérer la dilatation différentielle due à l'hétérogénéité des matériaux constituant ses composants, dont les engrenages. C'est pourquoi un dispositif de transmission de l'art antérieur comprend des engrenages équipés d'un secteur mince soumis à des efforts exercés par un ressort pour rattraper le jeu angulaire. Cela permet de supprimer le jeu du levier dans une large plage de température de fonctionnement.

Toutefois, les couples et/ou les vitesses de manoeuvre demeurent relativement faibles. Ainsi, le couple transmis est de l'ordre de 1 Nm et la vitesse de manoeuvre du levier de l'ordre de 80°/s sur l'arbre d'entrée ou arbre menant. Pour augmenter ces couples et/ou vitesses, il faut aussi augmenter les efforts de rattrapage qui s'exercent entre les engrenages du dispositif, ce qui génère une friction relativement importante et fluctuante. Pour un couple et/ou une vitesse de manoeuvre supérieur(s) à un seuil déterminé, on introduit un jeu dynamique égal au jeu des roues montées sans secteur de rattrapage. L'ergonomie du levier et les sensations de pilotage s'en trouvent fortement dégradés. En outre, un dispositif de l'art antérieur ne permet pas de compenser les variations d'entraxe qui sont susceptibles de survenir entre les engrenages au cours de l'utilisation du levier, notamment sous l'effet de la dilatation différentielle.

La présente invention vise notamment à remédier à ces inconvénients, en proposant un dispositif pour transmettre un mouvement de rotation avec réduction de vitesse, qui est ergonomique, à friction faible et à jeu angulaire nul, tolérant aux variations dimensionnelles, robuste et de construction simple. Le document WO 98 557 80décrit un dispositif pour transmettre un movement selon la préambule de la revendication 1.

A cet effet l'invention a pour objet un dispositif, pour transmettre un mouvement de rotation avec réduction de vitesse, comprenant un premier organe apte à pivoter autour d'un premier axe et un deuxième organe apte à pivoter autour d'un deuxième axe, le deuxième axe étant sensiblement parallèle au premier axe. Ce dispositif est caractérisé en ce qu'il comprend, en outre, un troisième organe apte à pivoter autour du premier axe indépendamment du premier organe, en ce que les premier, deuxième et troisième organes définissent respectivement un premier, un deuxième et un troisième segments curvilignes, en ce qu'il comporte au moins un élément longiligne et flexible qui est fixé au moins au premier organe et au troisième organe et qui est disposé sur les premier, deuxième et troisième segments curvilignes et en ce qu'il comporte, en outre, des moyens élastiques de rappel agencés entre le premier organe et le troisième organe et aptes à tendre ledit élément longiligne et flexible, de manière à rattraper un jeu angulaire susceptible d'apparaître entre lesdits organes.

Selon d'autres caractéristiques avantageuses mais facultatives de l'invention, prises ici isolément ou selon toute combinaison techniquement admissible :
- l'élément longiligne et flexible est formé par deux éléments longilignes, un premier élément longiligne étant lié au premier organe et fixé au deuxième organe et disposé sur les premier et deuxième segments curvilignes, alors que le deuxième élément longiligne est lié au deuxième organe et fixé au troisième organe et disposé sur les deuxième et troisième segments curvilignes ;
- le premier segment curviligne présente un profil circulaire de rayon compris entre 20 mm et 100 mm, alors que le deuxième segment curviligne présente un profil circulaire de rayon compris entre 5 mm et 100 mm, et alors que le troisième segment curviligne présente un profil circulaire de rayon compris entre 20 mm et 100 mm ;
- le premier segment curviligne s'étend sur un angle compris entre 5° et 100°, le deuxième segment curviligne s'étend sur un angle compris entre 5° et 310° et le troisième segment curviligne s'étend sur un angle compris entre 5° et 100° ;
- le premier organe et le troisième organe sont partiellement superposés selon une direction parallèle au premier axe, alors que le premier organe et le troisième organe présentent, entre leurs segments curvilignes respectifs et le premier axe, des formes cylindriques complémentaires, de façon à pouvoir pivoter l'un par rapport à l'autre autour dudit axe ;
- l'un au moins des organes précités comporte des moyens de guidage du ou de chaque élément longiligne selon une direction parallèle au premier axe ;
- les moyens élastiques de rappel comprennent un ressort linéaire travaillant en compression entre le premier organe et le troisième organe ;
- le ou chaque élément longiligne est constitué de para-aramide ;
- le ou chaque élément longiligne est choisi dans le groupe comprenant un fil, une tresse, un câble et un ruban ; et
- le ou chaque élément longiligne est fixé à des ergots solidaires respectivement desdits organes.

Par ailleurs, l'invention a pour objet un mécanisme de transmission de mouvement, pour piloter un aéronef, qui comprend un dispositif tel qu'exposé ci-dessus.

L'invention sera bien comprise et d'autres avantages de celle-ci ressortiront aussi à la lumière de la description qui va suivre, donnée uniquement à titre d'exemple non limitatif et faite en référence aux dessins annexés, dans lesquels :
- la figure 1 est une vue en perspective d'un dispositif conforme à l'invention ;
- la figure 2 est une vue en perspective éclatée du dispositif de la figure 1 ;
- la figure 3 est une vue analogue à la figure 1 sous un angle différent ; et
- les figures 4 à 6 sont des vues de face du dispositif des figures 1 à 3 selon trois positions angulaires différentes.

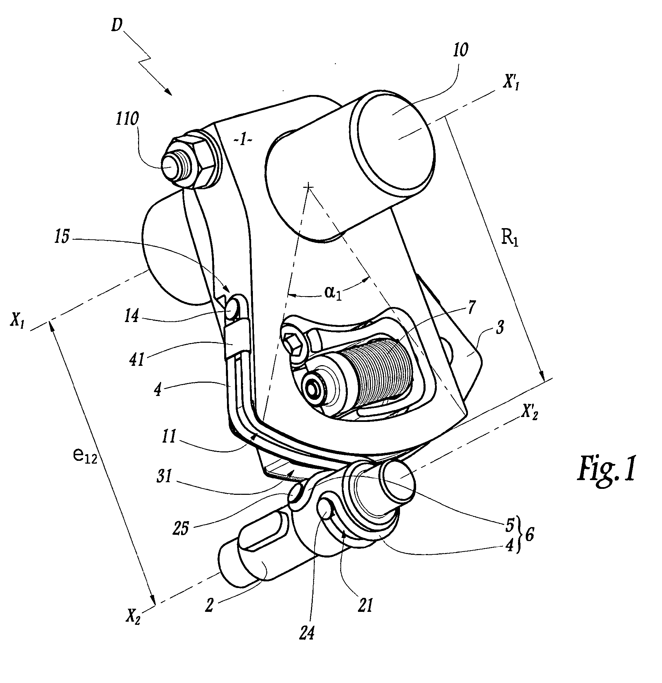

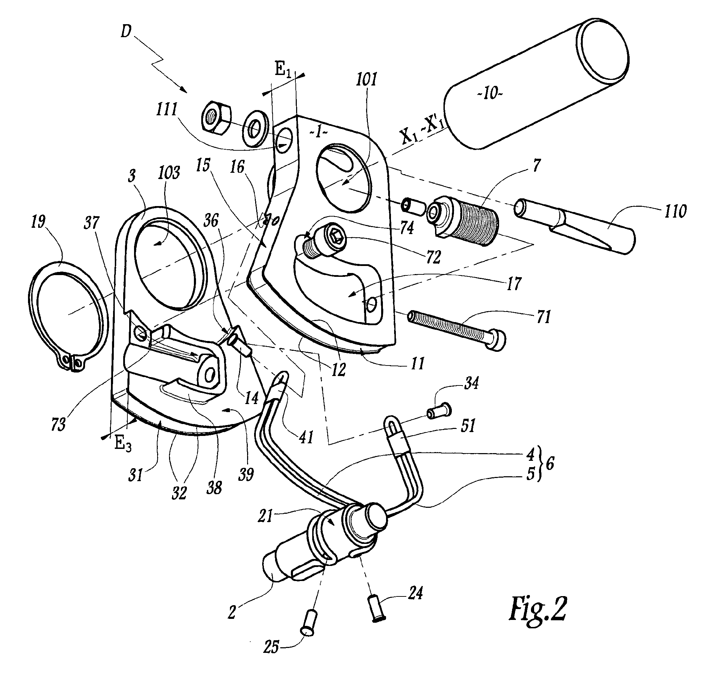

La figure 1 montre un dispositif de transmission D conforme à l'invention, qui comprend un premier organe 1 apte à être entraîné par un arbre menant 10, en pivotement autour d'un premier axe X₁-X'₁. L'arbre 10 est dit « menant », car il est mécaniquement relié à un levier, non représenté, manoeuvré par le pilote. Le premier organe 1 est solidarisé à l'arbre 10 au moyen d'une clavette 110, à méplat et à filetage excentrique, connue en soi et montée dans un logement 111 comme cela est symbolisé à la figure 2. Il est donc également qualifié de « menant ».

Le dispositif D comprend également un deuxième organe 2 présentant globalement la forme d'un arbre cylindrique apte à pivoter autour d'un deuxième axe X₂-X'₂. Le deuxième axe X₂-X'₂ est sensiblement parallèle à l'axe X₁-X'₁, ces deux axes étant séparés par un entraxe e₁₂. Le deuxième organe 2 est dit « mené », car il est entraîné en pivotement autour de l'axe X₂-X'₂ par l'organe menant 1, lorsque le pilote manoeuvre le levier.

Pour transmettre, de l'organe menant 1 à l'organe mené 2, le mouvement de rotation imprimé au levier par le pilote, le dispositif D comprend un élément longiligne formé ici d'un premier câble 4, dont la structure et le fonctionnement sont détaillés ci-après.

Le dispositif D comprend par ailleurs un troisième organe 3 apte à pivoter autour de l'axe X₁-X'₁. Comme le montrent la figure 2 et les figures 4 à 6, le premier organe 1 et le troisième organe 3 présentent chacun, en section dans un plan perpendiculaire à l'axe X₁-X'₁, globalement la forme d'une portion angulaire de cylindre relativement plat et à base circulaire ; en d'autres termes, la forme d'une « part de gâteau ». L'épaisseur E₁ du premier organe 1 et l'épaisseur E₃ du troisième organe 3, mesurées selon une direction parallèle à l'axe X₁-X'₁, sont chacune de l'ordre de 7 mm. Après leur assemblage, les organes 1 et 3 sont superposés en épaisseur, mais seulement partiellement selon un secteur angulaire centré sur l'axe X₁-X'₁. En d'autres termes, les positions des organes 1 et 3 autour de l'axe X₁-X'₁ présentent un décalage angulaire entre elles.

Le dispositif D comprend un deuxième câble 5, semblable au premier câble 4, qui permet de transmettre un mouvement de rotation de l'organe 1 à l'organe 3, comme cela est détaillé ci-après.

Comme le montrent les figures 1 et 2, la tranche du cylindre qui forme le premier organe 1 définit un premier segment curviligne 11. Dans un plan perpendiculaire à l'axe X₁-X'₁, le segment 11 s'étend sur un secteur angulaire dont l'angle au sommet α₁ vaut environ 40 ° et il présente un profil circulaire de rayon R₁ valant environ 48 mm. En pratique, l'angle α₁ peut être compris entre 5° et 100° et le rayon R₁ peut être compris entre 20 mm et 100 mm .

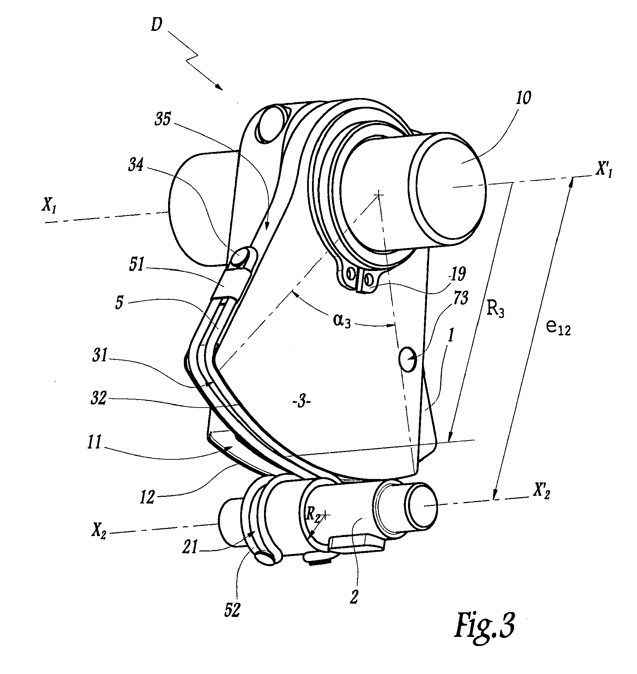

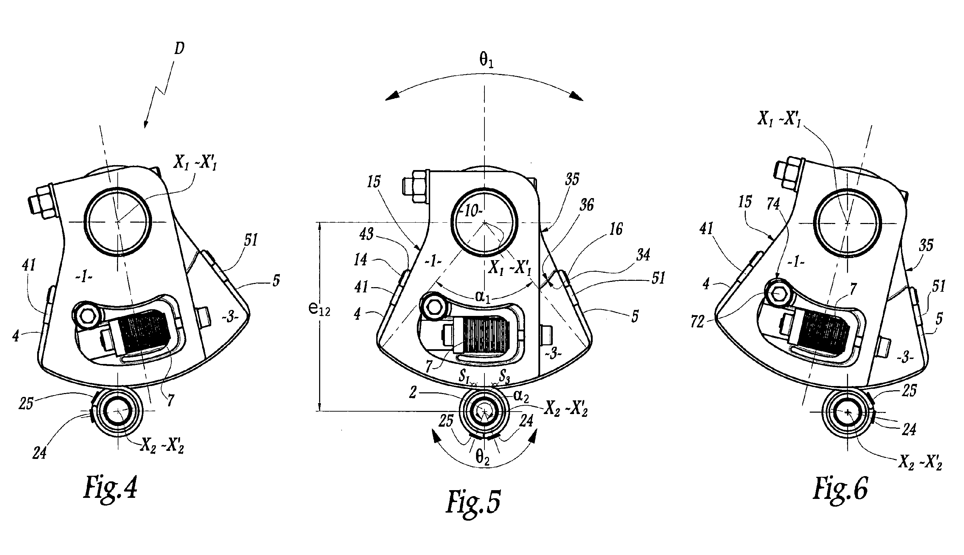

Le périmètre du deuxième organe 2 définit un deuxième segment curviligne 21, en l'occurrence en forme de cercle complet, soit avec un angle de 360°. Le segment 21 a un rayon R₂, visible à la figure 3, d'environ 6 mm et il s'étend sur un angle α₂, visible à la figure 5, valant environ 310°. En pratique, le rayon R₂ peut être compris entre 5 mm et 100 mm et l'angle α₂ peut être compris entre 5° et 310°.

Comme le montre la figure 3, à l'instar du premier organe 1, la tranche du cylindre qui forme le troisième organe 3 définit un troisième segment curviligne 31. Dans un plan perpendiculaire à l'axe X₁-X'₁, le segment 31 s'étend sur un secteur angulaire dont l'angle au sommet α₃ vaut environ 40°, comme l'angle α₁, et il présente un profil circulaire de rayon R₃ valant environ 48 mm et identique au rayon R₁. En pratique, l'angle α₃ peut être compris entre 5° et 100° et le rayon R₃ peut être compris entre 20 mm et 100 mm.

Le rapport de démultiplication R₁/R₂, ou inversement de réduction, entre les organes menant et mené vaut 7,4 (48,5 mm sur 6,5 mm, ce qui correspond au rapport des enroulements primitifs), ce qui est particulièrement élevé pour un mécanisme de transmission de mouvement associé à un manche d'aéronef. Compte tenu des rayons R₁ et R₂, l'entraxe e₁₂, qui sépare les axes X₁-X'₁ et X₂-X'₂, vaut environ 55,5 mm. En pratique, selon les dimensions des premier, deuxième et troisième organes, l'entraxe peut être compris entre 40 mm et 100 mm.

Selon une variante non représentée, les premier, deuxième et/ou troisième segment(s) curviligne(s) 11, 21, 31 peu(ven)t présenter un profil autre que circulaire, par exemple elliptique, spiral ou parabolique.

L'arbre 10 traverse un alésage 101 cylindrique de l'organe 1 et un alésage 103 cylindrique de l'organe 2. Contrairement à l'organe 1, qui est solidarisé à l'arbre 10 par la clavette 110, l'organe 3 est monté libre en rotation autour de l'arbre 10 et de l'axe X₁-X'₁. Comme le montre la figure 3, l'organe 3 est maintenu contre l'organe 1 au moyen d'un anneau élastique 19. L'organe 3 peut ainsi pivoter par rapport à l'organe 1 et autour de l'axe X₁-X'₁ indépendamment de l'organe 1.

De plus, pour contribuer à leur pivotement mutuel, l'organe 1 et l'organe 3 présentent, dans une région radiale médiane située entre l'axe X₁-X'₁ et les segments 11 et 31, des décrochements complémentaires, respectivement 16 et 36, de formes cylindriques centrées sur l'axe X₁-X'₁. Les décrochements 16 et 36 sont usinés respectivement dans l'épaisseur E₁ de l'organe 1 et dans l'épaisseur E₃ de l'organe 3. Les décrochements 16 et 36 constituent des chemins de glissement pour le premier organe 1 par rapport au troisième organe 3. Dans la mesure où les organes 1 et 3 sont partiellement superposés en épaisseur, leurs segments 11 et 31 sont voisins. Ainsi, le segment 31 forme en quelque sorte un prolongement du segment 11 parallèlement à l'axe X₁-X'₁.

Le câble 4 est disposé sur le segment 11 de l'organe 1 et sur le segment 21 de l'organe 2. Le câble 4 prend appui sur les segments 11 et 21. Au niveau du deuxième organe 2, le câble 4 s'enroule et fait « demi-tour » autour d'un ergot 24 fixé dans le segment 21 de l'organe 2. Le câble 4 est ainsi lié à l'ergot 24 avec la possibilité de glisser autour de l'ergot 24. Au niveau du premier organe 1, le câble 4 s'enroule et fait « demi-tour » autour d'un ergot 14 solidarisé à une face latérale 15 de l'organe 1, c'est-à-dire une face s'étendant entre l'axe X₁-X'₁ et le segment 11. Les deux extrémités du câble 4 sont enserrées au niveau d'une épissure 41 montée à proximité de l'ergot 14, de façon à fixer le câble 4 au premier organe 1.

De même, le câble 5 est disposé sur le segment 21 de l'organe 2 et sur le segment 31 de l'organe 3. Le câble 5 prend appui sur les segments 21 et 31. Au niveau du deuxième organe 2, le câble 5 s'enroule et fait « demi-tour » autour d'un ergot 25 fixé dans le segment 21. Le câble 5 est ainsi lié à l'ergot 25 avec la possibilité de glisser autour de l'ergot 25. Au niveau du premier organe 1, le câble 5 s'enroule et fait « demi-tour » autour d'un ergot 34 solidarisé à une face latérale 35 de l'organe 3, c'est-à-dire une face s'étendant entre l'axe X₁-X'₁ et le segment 31. Les deux extrémités du câble 5 sont enserrées au niveau d'une épissure 51 montée à proximité de l'ergot 34, de façon à fixer le câble 5 au troisième organe 3.

Le fait de ne pas fixer le câble 4 ou 5 à l'organe 2, mais simplement de le lier respectivement aux ergots 24 ou 25, permet au câble 4 ou 5 de glisser autour de l'ergot 24 ou 25, c'est-à-dire d'égaliser les longueurs des deux parties du câble 4 ou 5 qui s'étendent parallèlement entre les épissures 41 ou 51 et les ergots 24 ou 25. Ainsi, les efforts subis par chacune de ces parties du câble 4 ou 5 sont sensiblement égaux entre eux, ce qui maximise la résistance mécanique du câble 4 ou 5.

Les câbles 4 et 5 forment ensemble un élément longiligne et flexible 6 qui s'étend entre les ergots 14 et 34, sur les segments 11, 21 et 31. L'élément 6 est fixé aux organes 1 et 3 au niveau des ergots 14 et 34. L'élément 6 est lié à l'organe mené 2, au niveau des ergots 24 et 25. Les ergots 14, 24, 25 et 34 peuvent être respectivement sertis, vissé ou venus de matière dans ou avec les organes 1, 2 et 3.

Les câbles 4 et 5 sont aussi disposés en partie sur les faces latérales 15 et 35 des organes 1 et 3, puisqu'ils sont fixés par les ergots 14 et 34. Par conséquent, chacun des câbles 4 et 5 s'étend sur la jonction entre la face latérale 15 ou 35 de l'organe 1 ou 3 et le segment 11 ou 31 respectifs. Comme ces jonctions présentent des rayons de courbure faibles, les câbles 4 et 5 doivent de préférence être flexibles.

Comme le montrent les figures 2 et 3, les faces principales des organes 1 et 3 présentent des nervures 12 et 32 qui bordent les segments 11 et 31 sur leurs deux côtés et qui s'étendent radialement en saillie au-delà de la surface des segments 11 et 31. Les nervures 12 et 32 forment des rebords et constituent des moyens de guidage pour les câbles 4 et 5, selon une direction parallèle à l'axe X₁-X'₁, de façon à assurer leur maintien sur les segments 11 et 31. Selon une variante non représentée, de tels moyens de guidage des éléments longilignes peuvent être formés par une ou plusieurs gorges usinées à la surface des segments curvilignes.

Les câbles 4 et 5 sont réalisés en para-aramide, par exemple de la marque Kevlar®, si bien qu'ils présentent un module d'élasticité très élevé et donc une déformation élastique très faible sous les forces de traction appliquées aux câbles en service. Des éléments longilignes ainsi constitués peuvent donc être qualifiés de « inextensibles ». Les éléments longilignes du dispositif peuvent être formés de brins tressés. L'élément 6 est également inextensible puisqu'il est formé des câbles 4 et 5.

Les segments 11, 21 et 31 sont réalisés avec un état de surface lisse d'usinage courant, ce qui évite l'abrasion des câbles 4 et 5 lors du pivotement relatif des organes 1 et 3.

Comme le montrent les figures 1 et 2, le dispositif D comprend en outre un élément élastique linéaire 7 de rappel, agencé entre les organes 1 et 3. L'élément de rappel 7 est ici constitué d'un empilement de plusieurs rondelles Belleville montées sur une tige 71 et disposées au sein d'un logement 17 et d'un logement 37, appartenant respectivement aux organes 1 et 3. Le logement 17 est défini par une cavité traversant l'organe 1, tandis que le logement 37 est défini par une nervure 38 s'étendant en saillie par rapport à une face principale 39 de l'organe 3.

Après assemblage, les extrémités du ressort 7 sont fixées respectivement sur les organes 1 et 3. Le ressort 7 travaille en compression, ce qui tend à écarter angulairement les organes 1 et 3 l'un de l'autre. Le ressort 7 permet de maintenir les câbles 4 et 5 en tension, car il maximise la longueur curviligne sur laquelle ils s'étendent entre leurs extrémités respectives. Cette tension exercée sur les câbles 4 et 5 permet de rattraper le jeu angulaire susceptible d'apparaître entre les organes 1, 2 et/ou 3 lorsque le dispositif D est en service. Ainsi, lorsque le pilote manoeuvre le levier de l'aéronef, le dispositif D est apte à transmettre, aux organes directionnels de l'aéronef, un mouvement de rotation à jeu nul et à friction faible et constante, dans la mesure où chaque élément longiligne 4, 5 ou 6 du dispositif D est inextensible. Un dispositif conforme à l'invention procure une ergonomie et des sensations de pilotage améliorées, notamment car il supprime la sensation d'engrènement ressentie avec les dispositifs de l'art antérieur.

De plus, les câbles en para-aramide sont aptes à résister à des températures très élevées et ils présentent une dilatation très faible, voire nulle, pour des températures de fonctionnement comprises entre -40°C et +70°C. Cela garantit une bonne « indexation » du dispositif D, c'est-à-dire un positionnement reproductible de l'organe menant 1, de l'organe mené 2 et de l'organe de rattrapage de jeu 3 les uns par rapport aux autres.

Le premier organe 1 et le troisième organe 3 peuvent être réalisés en acier ordinaire ou en aluminium et l'organe mené 2 peut être réalisé en acier ordinaire pour transmettre des couples importants. De tels matériaux sont peu onéreux, contrairement aux aciers spéciaux traités qui constituent les engrenages des dispositifs de l'art antérieur. Du reste, les organes menant 1, mené 2 et de rattrapage de jeu 3 sont des pièces moins coûteuses à usiner que les engrenages de l'art antérieur.

L'utilisation de différents matériaux pour réaliser, d'une part, les trois organes 1, 2 et 3 et, d'autre part, le châssis non représenté qui porte l'arbre 10 et l'organe 2, peut induire une dilatation différentielle et donc introduire une variation de l'entraxe ou un jeu angulaire. L'entraxe e₁₂ du dispositif D peut ainsi varier de 1 mm sans introduire de jeu angulaire dans la transmission de mouvement. Cependant, un dispositif conforme à l'invention est apte à compenser cette dilatation différentielle, au moyen des câbles inextensibles et au moyen de l'organe de rattrapage de jeu 3 monté sur ressort.

De plus, la friction éventuellement générée dans un dispositif conforme à l'invention est sensiblement inférieure à celle générée, par exemple, entre les dentures des engrenages de l'art antérieur soumis aux efforts exercés par le ressort sur le secteur de rattrapage de jeu. Cela améliore encore l'ergonomie et les sensations de pilotage en réduisant le niveau et l'ondulation ou fluctuation de cette friction, en particulier pour des couples de manoeuvre importants.

Un dispositif conforme à l'invention permet de transmettre, sans jeu ou sans « défaussage », un couple de manoeuvre pouvant s'élever à 10 Nm, tandis que ce couple est généralement limité à 1,5 Nm dans l'art antérieur. De même, un dispositif conforme à l'invention est apte à supporter un couple maximal en charge ultime avant rupture 1,5 fois supérieur au couple maximal transmissible par les engrenages de l'art antérieur. Par « défaussage » on désigne la défaillance de la fonction de rattrapage de jeu dans le cas d'un dispositif de l'art antérieur à roues dentées. En pratique, cette défaillance survient quand le pilote applique, sur l'arbre menant, un couple de manoeuvre dans un sens tel que les efforts sont transmis par le secteur denté de rattrapage et que ce couple de manoeuvre produit sur le ressort de rattrapage un effort supérieur à la précharge de ce ressort.

Le dispositif D objet de l'invention comporte en outre une vis de butée 72 qui est vissée dans un taraudage 73 réalisé dans le troisième organe 3 et qui reprend les efforts entre le premier organe 1 et le troisième organe 3 lorsque la capacité du ressort 7 est dépassée. Dans ce but, le premier organe comprend un logement 74, visible par exemple aux figures 2 et 6, de forme complémentaire à la tête de la vis de butée 73. Lorsque le ressort 7 n'est plus en mesure de reprendre les efforts, la vis de butée 73 et le logement 74 coopèrent et délestent le ressort 7.

Par ailleurs, un dispositif conforme à l'invention présente une endurance sensiblement augmentée par rapport aux dispositifs à engrenages de l'art antérieur, en raison d'une usure réduite des pièces en mouvement, à savoir les câbles et les organes menant, mené et de rattrapage de jeu. De plus, un dispositif conforme à l'invention ne nécessite pas de graissage pour son fonctionnement.

Les figures 4 à 6 illustrent trois positions angulaires adoptées par le dispositif D au cours de la manoeuvre du levier par le pilote. Les figures 4 et 6 présentent des positions angulaires éloignées et la figure 5 présente une position angulaire médiane. Entre les positions illustrées par les figures 4 et 6, l'organe 1 présente une course angulaire θ₁ d'environ 40° et l'organe 2 présente une course angulaire θ₂ d'environ 210°.

Dans la position angulaire extrême au-delà de la position illustrée à la figure 6, l'axe radial défini par l'ergot 24 occupe une position sensiblement verticale dans le repère des figures 4 à 6. Entre cette position angulaire extrême non représentée et la position médiane illustrée à la figure 5, l'organe 1 présente une course angulaire d'environ 20° et l'organe 2 présente une course angulaire d'environ 148°. De même, le dispositif présente une position extrême au-delà de la figure 4, qui est symétrique à celle atteinte au-delà de la figure 6 et décrite ci-dessus. Entre les deux positions extrêmes possibles, respectivement au-delà de la figure 4 et au-delà de la figure 6, l'organe 1 effectue donc une rotation d'environ 40° et l'organe 2 une rotation d'environ 296°.

Par ailleurs, comme le montre la figure 5, la partie du câble 4 qui s'étend entre le premier segment 11 et le deuxième segment 21 n'est en contact ni avec le premier segment 11 ni avec le deuxième segment 21. Le contact entre le câble 4 et le premier segment 11 est interrompu au niveau d'un point S₁ De manière similaire, le contact entre le câble 5 et le troisième segment 31 est interrompu au niveau d'un point S₃. Les dimensions des organes 1, 2 et 3, en particulier les rayons R₁, R₂ et R₃ et l'entraxe e₁₂, sont déterminées de façon à minimiser la distance S₁-S₃ entre les points S₁ et S₃.

Cela permet de maximiser le couple transmis entre les organes 1 et 3, d'une part et l'organe 2, d'autre part. En effet, lorsque la distance S₁-S₃ est faible, le câble 4 ou 5 est orienté sensiblement suivant la tangente au deuxième segment 21 au niveau du point de contact. Ainsi, l'effort transmis par le câble est porté par une direction sensiblement perpendiculaire aux directions radiales respectives des organes 1, 2 et 3 prises au niveau des points de contact, dont S₁ et S₃.

Selon une variante non représentée, chacun des câbles 4 et 5 peut être remplacé par un fil monobrin terminé par une boucle à chacune de ses extrémités. Selon une autre variante non représentée, les câbles 4 et 5 peuvent être remplacés par un seul câble disposé sur les segments curvilignes des premier, deuxième et troisième organes. Alternativement encore, l'élément longiligne assurant la transmission du mouvement de rotation entre l'organe menant et l'organe mené peut être constitué d'un ruban relativement plat ou d'une tresse plus épaisse.

D'autres variantes peuvent être envisagées dans le cadre de l'invention. Par exemple, le dispositif objet de l'invention peut avoir une géométrie telle que l'élément longiligne s'enroule en hélice, notamment autour du deuxième organe. Dans le cas où l'élément longiligne est formé par des câbles, ce qui permet de limiter l'encombrement d'un tel dispositif, les plans contenant l'axe neutre des câbles ne sont alors plus perpendiculaires aux axes des premier et deuxième organes. Une telle géométrie permet d'augmenter le rapport de réduction en conférant au deuxième organe une course angulaire de plus de 360°, sans générer d'interférence entre les éléments mécaniques.

Un mécanisme de transmission de mouvement incorporant le dispositif D peut être incorporé à un aéronef pour transmettre les ordres de commande des vols à partir du poste de pilotage.

## Revendications

1. Dispositif (D), pour transmettre un mouvement de rotation avec réduction de vitesse, comprenant un premier organe (1) apte à pivoter autour d'un premier axe (X₁-X'₁) et un deuxième organe (2) apte à pivoter autour d'un deuxième axe (X₂-X'₂), le deuxième axe (X₂-X'₂) étant sensiblement parallèle au premier axe (X₁-X'₁), ce dispositif (D) étant **caractérisé**
- **en ce qu'**il comprend, en outre, un troisième organe (3) apte à pivoter autour du premier axe (X₁-X'₁) indépendamment du premier organe (1),
- **en ce que** les premier (1), deuxième (2) et troisième (3) organes définissent respectivement un premier (11), un deuxième (21) et un troisième (31) segments curvilignes,
- **en ce qu'**il comporte au moins un élément (6) longiligne et flexible, qui est fixé au moins au premier organe (1) et au troisième organe (3) et qui est disposé sur les premier (11), deuxième (21) et troisième (31) segments curvilignes et
- **en ce qu'**il comporte, en outre, des moyens élastiques de rappel (7) agencés entre le premier organe (1) et le troisième organe (3) et aptes à tendre ledit élément longiligne et flexible (6), de manière à rattraper un jeu angulaire susceptible d'apparaître entre lesdits organes (1, 2, 3).

2. Dispositif (D) selon la revendication 1, **caractérisé en ce que** l'élément longiligne et flexible (6) est formé par deux éléments longilignes (4, 5), un premier élément longiligne (4) étant lié au premier organe (1) et fixé au deuxième organe (2) et disposé sur les premier (11) et deuxième (21) segments curvilignes, alors qu'un deuxième élément longiligne (5) est lié au deuxième organe (2) et fixé au troisième organe (3) et disposé sur les deuxième (21) et troisième (31) segments curvilignes.

3. Dispositif (D) selon l'une des revendications précédentes, **caractérisé en ce que** le premier segment curviligne (11) présente un profil circulaire de rayon (R₁) compris entre 20 mm et 100 mm, **en ce que** le deuxième segment curviligne (21) présente un profil circulaire de rayon (R₂) compris entre 5 mm et 100 mm et **en ce que** le troisième segment curviligne (31) présente un profil circulaire de rayon (R₃) compris entre 20 mm et 100 mm.

4. Dispositif (D) selon l'une des revendications précédentes, **caractérisé en ce que** le premier segment curviligne (11) s'étend sur un angle (α₁) compris entre 5° et 100 °, **en ce que** le deuxième segment curviligne (21) s'étend sur un angle (α₂) compris entre 5° et 310 et **en ce que** le troisième segment curviligne (31) s'étend sur un angle (α₃) compris entre 5° et 100°.

5. Dispositif (D) selon l'une des revendications précédentes, **caractérisé en ce que** le premier organe (1) et le troisième organe (3) sont partiellement superposés selon une direction parallèle au premier axe (X₁-X'₁) et **en ce que** le premier organe (1) et le troisième organe (3) présentent, entre leurs segments curvilignes respectifs (11, 31) et le premier axe (X₁-X'₁), des formes cylindriques complémentaires (16, 36) de façon à pouvoir pivoter l'un par rapport à l'autre autour dudit axe.

6. Dispositif (D) selon l'une des revendications précédentes, **caractérisé en ce que** l'un au moins desdits organes (1, 2, 3) comporte des moyens de guidage (12, 32) du ou de chaque élément longiligne (4, 5, 6) selon une direction parallèle au premier axe (X₁-X'₁).

7. Dispositif (D) selon l'une des revendications précédentes, **caractérisé en ce que** les moyens élastiques de rappel comprennent un ressort linéaire (7) travaillant en compression entre le premier organe (1) et le troisième organe (3).

8. Dispositif (D) selon l'une des revendications précédentes, **caractérisé en ce que** le ou chaque élément longiligne (4, 5, 6) est constitué de para-aramide.

9. Dispositif (D) selon l'une des revendications précédentes, **caractérisé en ce que** le ou chaque élément longiligne (4, 5, 6) est choisi dans le groupe comprenant un fil, une tresse, un câble et un ruban.

10. Dispositif (D) selon l'une des revendications précédentes, **caractérisé en ce que** le ou chaque élément longiligne (4, 5, 6) est fixé à des ergots (14, 24, 25, 34) solidaires respectivement desdits organes (1, 2, 3).

11. Mécanisme de transmission de mouvement, pour piloter un aéronef, **caractérisé en ce qu'**il comprend un dispositif (D) selon l'une des revendications précédentes.

## Claims

1. Device (D) for transmitting movement of rotation with reduction of speed, comprising a first unit (1) which can pivot around a first axis (X₁-X'₁) and a second unit (2) which can pivot around a second axis (X₂-X'₂), the second axis (X₂-X'₂) being substantially parallel to the first axis (X₁-X'₁), this device (D) being **characterised:**
- **in that** it additionally comprises a third unit (3) which can pivot around the first axis (X₁-X'₁), independently from the first unit (1);
- **in that** the first (1), second (2) and third (3) units define respectively a first (11), a second (21) and a third (31) curved segments;
- **in that** it comprises at least one flexible longilineal element (6) which is secured at least to the first unit (1) and to the third unit (3), and is disposed on the first (11), second (21) and third (31) curved segments; and
- **in that** it additionally comprises resilient return means (7) which are arranged between the first unit (1) and the third unit (3), and can draw the said flexible longilineal element (6) tight, so as to take up angular play which can appear between the said units (1, 2, 3).

2. Device (D) according to claim 1, **characterised in that** the flexible longilineal element (6) is formed by two longilineal elements (4, 5), a first longilineal element (4) being connected to the first unit (1) and secured to the second unit (2), and is disposed on the first (11) and second (21) curved segments, whereas a second longilineal element (5) is connected to the second unit (2) and secured to the third unit (3), and is disposed on the second (21) and third (31) curved segments.

3. Device (D) according to one of the preceding claims, **characterised in that** the first curved segment (11) has a circular profile with a radius (R₁) of between 20 mm and 100 mm, **in that** the second curved segment (21) has a circular profile with a radius (R₂) of between 5 mm and 100 mm, and **in that** the third curved segment (31) has a circular profile with a radius (R₃) of between 20 mm and 100 mm.

4. Device (D) according to one of the preceding claims, **characterised in that** the first curved segment (11) extends over an angle (α₁) of between 5° and 100°, **in that** the second curved segment (21) extends over an angle (α₂) of between 5° and 310°, and **in that** the third curved segment (31) extends over an angle (α₃) of between 5° and 100°.

5. Device (D) according to one of the preceding claims, **characterised in that** the first unit (1) and the third unit (3) are partially superimposed according to a direction which is parallel to the first axis (X₁-X'₁) and **in that** the first unit (1) and the third unit (3) have, between their respective curved segments (11, 31) and the first axis (X₁-X'₁), complementary cylindrical forms (16, 36) so as to be able to pivot relative to one another round the said axis.

6. Device (D) according to one of the preceding claims, **characterised in that** at least one of the said units (1, 2, 3) comprises means (12, 32) for guiding the or each longilineal element (4, 5, 6) according to a direction which is parallel to the first axis (X₁-X'₁).

7. Device (D) according to one of the preceding claims, **characterised in that** the resilient return means comprise a linear spring (7) which works in compression between the first unit (1) and the third unit (3).

8. Device (D) according to one of the preceding claims, **characterised in** the or each longilineal element (4, 5, 6) is constituted by para-aramid.

9. Device (D) according to one of the preceding claims, **characterised in that** the or each longilineal element (4, 5, 6) is selected from the group comprising a wire, a braid, a cable and a tape.

10. Device (D) according to one of the preceding claims, **characterised in that** the or each longilineal element (4, 5, 6) is secured to lugs (14, 24, 25, 34) which are integral respectively with the said units (1, 2, 3).

11. Movement transmission mechanism for piloting of an aircraft, **characterised in that** it comprises a device (D) according to one of the preceding claims.

## Patentansprüche

1. Vorrichtung (D) zum Übertragen einer Drehbewegung mit Verringerung der Geschwindigkeit, umfassend ein erstes Element (1), das um eine erste Achse (X₁-X'₁) schwenken kann, und ein zweites Element (2), das um eine zweite Achse (X₂-X'₂) schwenken kann, wobei die zweite Achse (X₂-X'₂) im Wesentlichen parallel zur ersten Achse (X₁-X'₁) ist, wobei diese Vorrichtung (D) **dadurch gekennzeichnet ist,**
- **dass** sie ferner ein drittes Element (3) umfasst, das um die erste Achse (X₁-X'₁) unabhängig vom ersten Element (1) schwenken kann,
- **dass** die ersten (1), zweiten (2) und dritten (3) Elemente ein erstes (11), zweites (21) bzw. drittes (31) gekrümmtes Segment definierten,
- **dass** sie mindestens ein längliches und biegsames Element (6) umfasst, das mindestens am ersten Element (1) und am dritten Element (3) befestigt und auf den ersten (11), zweiten (21) und dritten (31) gekrümmten Segmenten angeordnet ist, und
- **dass** sie ferner elastische Rückstellmittel (7) umfasst, die zwischen dem ersten Element (1) und dem dritten Element (3) angeordnet und geeignet sind, das längliche und biegsame Element (6) zu spannen, um ein Winkelspiel, das zwischen den Elementen (1, 2, 3) auftreten kann, rückzustellen.

2. Vorrichtung (D) nach Anspruch 1, **dadurch gekennzeichnet, dass** das längliche und biegsame Element (6) von zwei länglichen Einheiten (4, 5) gebildet ist, wobei eine erste längliche Einheit (4) mit dem ersten Element (1) verbunden und am zweiten Element (2) befestigt und auf dem ersten (11) und zweiten (21) gekrümmten Segment angeordnet ist, während eine zweite längliche Einheit (5) mit dem zweiten Element (2) verbunden und am dritten Element (3) befestigt und auf dem zweiten (21) und dritten (31) gekrümmten Segment angeordnet ist.

3. Vorrichtung (D) nach einem der vorhergehenden Ansprüche, **dadurch gekennzeichnet, dass** das erste gekrümmte Segment (11) ein kreisförmiges Profil mit einem Radius (R₁) zwischen 20 mm und 100 mm aufweist, dass das zweite gekrümmte Segment (21) ein kreisförmiges Profil mit einem Radius (R₂) zwischen 5 mm und 100 mm aufweist, und dass das dritte gekrümmte Segment (31) ein kreisförmiges Profil mit einem Radius (R₃) zwischen 20 mm und 100 mm aufweist.

4. Vorrichtung (D) nach einem der vorhergehenden Ansprüche, **dadurch gekennzeichnet, dass** sich das erste gekrümmte Segment (11) über einen Winkel (α₁) zwischen 5° und 100° erstreckt, dass sich das zweite gekrümmte Segment (21) über einen Winkel (a₂) zwischen 5° und 310° erstreckt, und dass sich das dritte gekrümmte Segment (31) über einen Winkel (α₃) zwischen 5° und 100° erstreckt.

5. Vorrichtung (D) nach einem der vorhergehenden Ansprüche, **dadurch gekennzeichnet, dass** das erste Element (1) und das dritte Element (3) teilweise in eine Richtung parallel zur ersten Achse (X₁-X'₁) übereinander angeordnet sind, und dass das erste Element (1) und das dritte Element (3) zwischen ihren jeweiligen gekrümmten Segmenten (11, 31) und der ersten Achse (X₁-X'₁) komplementäre zylindrische Formen (16, 36) aufweisen, um zueinander um die Achse schwenken zu können.

6. Vorrichtung (D) nach einem der vorhergehenden Ansprüche, **dadurch gekennzeichnet, dass** mindestens eines der Elemente (1, 2, 3) Führungsmittel (12, 32) für das oder jedes längliche Element (4, 5, 6) entlang einer Richtung parallel zur ersten Achse (X₁-X'₁) umfasst.

7. Vorrichtung (D) nach einem der vorhergehenden Ansprüche, **dadurch gekennzeichnet, dass** die elastischen Rückstellmittel eine lineare Feder (7) umfassen, die zwischen dem ersten Element (1) und dem dritten Element (3) durch Zusammendrücken wirkt.

8. Vorrichtung (D) nach einem der vorhergehenden Ansprüche, **dadurch gekennzeichnet, dass** das oder jedes längliche Element (4, 5, 6) von einem Para-Aramid gebildet ist.

9. Vorrichtung (D) nach einem der vorhergehenden Ansprüche, **dadurch gekennzeichnet, dass** das oder jedes längliche Element (4, 5, 6) in der Gruppe, umfassend einen Draht, eine Litze, ein Kabel oder ein Band, ausgewählt wird.

10. Vorrichtung (D) nach einem der vorhergehenden Ansprüche, **dadurch gekennzeichnet, dass** das oder jedes längliche Element (4, 5, 6) an Haken (14, 24, 25, 34) befestigt ist, die jeweils mit den Elementen (1, 2, 3) verbunden sind.

11. Mechanismus zur Übertragung einer Bewegung, um ein Luftschiff zu steuern, **dadurch gekennzeichnet, dass** er eine Vorrichtung (D) nach einem der vorhergehenden Ansprüche umfasst.
